# EUROPÄISCHE PATENTSCHRIFT

(11) **EP 3 846 998 B1**
(45) Veröffentlichungstag und Bekanntmachung des Hinweises auf die Patenterteilung: **23.02.2022**
(21) Anmeldenummer: 18803881.4
(22) Anmeldetag: 31.10.2018
(51) Int. Cl.: B29C 48/21, B29C 48/00, B29C 48/30, B29C 48/36, B29C 48/06, B29C 48/09, B29C 48/11, B29C 48/12

(54) **VORRICHTUNG ZUM FORMEN EINES KUNSTSTOFFBAUTEILS**
DEVICE FOR FORMING A PLASTIC COMPONENT
DISPOSITIF DE FAÇONNAGE D'UN COMPOSANT EN MATIÈRE PLASTIQUE

(30) Priorität: 18.09.2018 DE 102018122797
(43) Veröffentlichungstag der Anmeldung: 14.07.2021
(73) Patentinhaber: KraussMaffei Technologies GmbH, 80997 München (DE)
(72) Erfinder: AGERER, Markus, 82140 Olching Bayern (DE); SCHMIDHUBER, Sebastian, 80805 München (DE); BRUNNER, Robert, 86156 Augsburg (DE)
(74) Vertreter: Krauss, Philipp
(86) Internationale Anmeldenummer: PCT/EP2018/079809
(87) Internationale Veröffentlichungsnummer: WO 2020/057762

(56) Entgegenhaltungen:
- EP-A1- 2 062 717
- WO-A1-03/023791
- WO-A1-2012/034146
- DE-A1- 3 609 410
- US-A1- 2006 012 066
- US-A1- 2007 045 886
- US-A1- 2016 076 249

## Beschreibung

Die vorliegende Erfindung betrifft eine Vorrichtung zum Formen eines Kunststoffbauteils mit mindestens einem Hohlraum, die in Vorrichtungen zum Erzeugen von Kunststoffbauteilen mittels Pultrusion oder Extrusion verwendet werden kann. Insbesondere betrifft die vorliegende Erfindung derartige Vorrichtungen, mit denen gleichzeitig mit dem Erzeugen von Kunststoffbauteilen mit Hohlräumen eine Masse in den Hohlraum eingebracht werden kann.

Es ist bekannt, Kunststoffbauteile in Endlosfertigung herzustellen. Hierzu werden üblicherweise Pultrusionsverfahren (auch Strangziehverfahren genannt) oder Extrusionsverfahren verwendet.

Pultrusionsverfahren stellen kontinuierliche Herstellungsverfahren zur Fertigung von (faserverstärkten) Kunststoffprofilen dar. Hierzu werden in einem Pultrusionswerkzeug Endlosfasern (oder auch andere Halbzeugformen, Gelege, Gewebe oder Einleger) mit Kunststoff (Polyurethan, Polyamid, Epoxidharz oder dergleichen) vermischt und zu einem Profil geformt. Diese Profile können auch mit einem Hohlraum oder mehreren Hohlräumen gefertigt werden. Um Hohlräume herstellen zu können, müssen üblicherweise sogenannte Kerne in das Werkzeug eingebracht werden. Die Mischung aus Endlosfaser und Kunststoff wird dann um den Kern geführt und härtet bei Vorbeiführen am Kern aus, sodass am Ende des Kerns ein Kunststoffbauteil mit einem dem Durchmesser des Kerns entsprechenden durchgängigen Hohlraum vorliegt. Dieses kann dann weiteren Verarbeitungsschritten zugeführt werden. Ein Beispiel für durch Pultrusion hergestellte Kunststoffbauteile sind Rahmen für Kunststofffenster, deren Profile pultrudiert werden, bevor sie geschnitten und zum Rahmen gefügt werden.

Bei Extrusionsverfahren werden feste bis dickflüssige, üblicherweise thermoplastische, härtbare Massen unter Druck kontinuierlich aus einer formgebenden Öffnung (auch als Düse, Matrize, Mundstück oder Extrusionsmaske bezeichnet) herausgepresst. Dabei entstehen Körper mit dem Querschnitt der Öffnung, Extrudat genannt, in theoretisch beliebiger Länge. Bekannt sind dabei Verfahren, bei denen zwei Rohre ineinander extrudiert werden, wobei der Raum zwischen den beiden Rohren mit Polyurethan (PUR) ausgeschäumt werden kann.

Ein Ausschäumen von Profilen und anderen hohlen Bauteilen, u.a. mit PUR, wird z.B. zum Zwecke der Wärmeisolation vorgenommen. Ein Beispiel hierfür sind doppelwandige Rohre, die im Extrusionsverfahren hergestellt werden und bei denen der äußere Hohlraum mittels einer PUR-Dosieranlage mit PUR ausgeschäumt wird. Ein anderes Beispiel sind Kühlschränke, bei denen ebenfalls ein Hohlraum zwischen äußerem und innerem Gehäuse durch PUR gefüllt wird. Bekannt ist auch das Ausschäumen von Fensterprofilen zur Wärmeisolation.

So beschreibt WO 2012 / 034 146 A1 eine Extrusionsdüse für ein Extrusionswerkzeug zum Herstellen von Verbundprofilen aus unterschiedlichen Werkstoffen, welche mit unterschiedlichen Temperaturen verarbeitet werden. Die Extrusionsdüse weist in einem Düsenkörper getrennte Kanäle auf, welche an der Stirnseite der Extrusionsdüse münden und durch welche unterschiedliche Werkstoffe gefördert werden. Wenigstens ein Kanal wird von einer austauschbar im Düsenkörper aufgenommenen Düse gebildet, die eine Temperiereinrichtung aufweist.

US 2016 / 076 249 A1 zeigt eine Bewehrungsstruktur zur Betonbewehrung mit einem länglichen röhrenförmigen Mittelwandabschnitt. Der zentrale Wandabschnitt kann in Umfangsrichtung um eine Kernachse herum ausgebildet sein und Glas- oder Kohlenstofffasern enthalten, die meist in Längsrichtung parallel zur Kernachse ausgerichtet sind. Die Bewehrungsstruktur kann einen Innenwandabschnitt umfassen, der mit der Innenfläche des Mittelwandabschnitts verbunden ist. Der Innenwandabschnitt kann Glas- oder Kohlenstofffasern enthalten und kann einen höheren Prozentsatz an Fasern aufweisen, die nicht parallel zur Kernachse ausgerichtet sind, verglichen mit dem Mittelwandabschnitt.

WO 03 / 023 791 A1 beschreibt ein Extrusionsverfahren und eine Extrusionsvorrichtung zur Herstellung eines Kabels mit mindestens einem Kern, der mindestens ein durchlässiges Element und mindestens ein Paar Beschichtungsschichten umfasst beschrieben in radial äußerer Position bezüglich des Kerns. Das Verfahren umfasst die gleichzeitigen Schritte des Abscheidens durch Coextrusion mindestens einer Überzugsschicht aus Polymermaterial und einer Überzugsschicht aus expandiertem Polymermaterial und des Aufrechterhaltens eines Restdrucks, der nicht größer als der Außendruck ist, der zwischen den Beschichtungsschichten definiert ist.

EP 2 062 717 A1 betrifft ein Verfahren zur Herstellung von Kunststoffprofilen mit einem geschäumten Kern in einem Co-Extrusionsverfahren, wobei ein schäumbares Material, insbesondere in festem Zustand, in den Hohlraum eines Kunststoffhohlprofils co-extrudiert wird und darin geschäumt wird. Das Verfahren eignet sich insbesondere für die Herstellung von Flügel- und Rahmenprofilen von Fenstern.

US 2006 / 012 066 A1 zeigt ein System und ein Verfahren zum Leiten einer Flüssigkeit durch eine Düse. Eine Übertragungsvorrichtung für ein Fluid (z. B. ein Kühlfluid oder ein Material) kann sich durch ein Inneres der Düse erstrecken. Die Übertragungsvorrichtung kann so angeordnet sein, dass eine unerwünschte Wärmeübertragung mit anderen Teilen der Düse begrenzt ist.

DE 36 09 410 A1 betrifft ein Verfahren, mit dessen Hilfe es möglich ist, eine reflektierende Überzugsschicht auf die Oberflächen aufzubringen, die einer Hohlkammer eines Kunststofffensterprofils oder dergleichen zugewandt sind. Durch dieses Verfahren wird eine reflektierende Schicht in ein Kunststofffensterprofil oder dergleichen eingeführt, wodurch die Isolationswirkung dieses Profils wiederum verbessert wird.

US 2007 / 045 886 A1 betrifft extrudierte Verbundwerkstoffe, die sich speziell auf die zunehmende Tragfähigkeit und die Gesamtfestigkeit von Verbundwerkstoffen konzentrieren. Injizierbare anpassungsfähige Strukturkernmaterialien werden verwendet, um Schaumzellen in extrudierten Verbundwerkstoffen zu ersetzen, wodurch die allgemeine Tragfähigkeit und Festigkeit erhöht wird. Die Kernmaterialien können auch Fasern und feste strukturelle Füllstoffe enthalten, um die Festigkeit des Verbundelements zu erhöhen. Ziel ist es, Verbundwerkstoffen die höchstmögliche strukturelle Tragfähigkeit zu ermöglichen, damit diese als Holzersatz eingesetzt werden können.

Mit den aus dem Stand der Technik bekannten Anlagen bzw. Verfahren ist es jedoch nicht möglich, Kunststoffbauteile in einem Schritt zu formen und zusätzlich mit einem weiteren Material zu füllen, wie etwa einem Kunststoffschaum.

Zum Beispiel können im Pultrusionsverfahren zwar kontinuierlich faserverstärkte Kunststoffprofile hergestellt werden. Diese sind jedoch entweder im Inneren mit einem gleichartigen Kunststoff-Faser-Gemisch gefüllt oder innen hohl. Ein gleichzeitiges Ausschäumen ("online" während des Pultrusionsvorgangs) des Hohlraums ist mit den üblichen Pultrusionsanlagen nicht möglich.

Insbesondere das Ausschäumen von Fensterprofilen aus PVC findet in einem diskontinuierlichen Verfahren statt, da die Temperaturen an den Stellen des Herstellungsprozesses zu hoch sind, an denen ein PUR-Eintrag möglich wäre. Das diskontinuierliche Ausschäumen der gesägten Profile stellt jedoch im Vergleich zu einem kontinuierlichen Schäumprozess direkt bei der Herstellung des Profils Mehrkosten dar.

Im Extrusionsverfahren findet derzeit das Ausschäumen von doppelwandigen Rohren vor der Extrusion des äußeren Rohrs statt. Die PUR-Isolationsschicht wird nach der Aufbringung auf das innere Rohr relativ aufwendig vorgeformt. Danach wird das Außenrohr über die PUR-Schicht extrudiert. Das Verfahren ist sehr aufwendig und damit teuer. Auch das nachträgliche Ausschäumen des Zwischenraums zwischen den beiden bereits zusammengebrachten Rohren ist mit den üblichen Verfahren schwierig und nicht kontinuierlich möglich.

Es ist daher Aufgabe der vorliegenden Erfindung, diese Probleme zu lösen und eine Vorrichtung und ein Verfahren anzugeben, mit der ein Kunststoffbauteil in eine Form mit mindestens einem Hohlraum gebracht und der Hohlraum gleichzeitig mit einer Masse ganz oder teilweise aufgefüllt werden kann.

Diese Aufgabe wird durch den Gegenstand der unabhängigen Ansprüche 1 und 6 gelöst.

Vorteilhafte Weiterbildungen sind in den abhängigen Ansprüchen angegeben.

Eine Vorrichtung zum Formen eines Kunststoffbauteils kann einen Körper aufweisen, der zum Verwenden in einer Vorrichtung zum Erzeugen von Kunststoffbauteilen aus einer ersten Masse geeignet ist und der derart ausgebildet ist, dass bei der Verwendung in der Vorrichtung zum Erzeugen von Kunststoffbauteilen die erste Masse durch Vorbeiführen an dem Körper in eine Form gebracht wird, die mindestens einen Hohlraum aufweist, der in Richtung des Vorbeiführens durchgängig ist. Dabei weist die Vorrichtung ein in dem Körper angeordnetes Leitungssystem auf, durch das eine zweite Masse aus einem Ende des Körpers ausgestoßen werden kann, um die zweite Masse in den Hohlraum einzubringen, während die erste Masse an dem Körper vorbeigeführt wird.

Die Vorrichtung besteht also aus einem Körper, der in einer Vorrichtung zum Erzeugen von Kunststoffbauteilen, insbesondere in einem Pultrusions- oder Extrusionswerkzeug, von dem Rohmaterial des Kunststoffbauteils umflossen wird (Faser-Kunststoffgemisch bei der Pultrusion, thermoplastische Massen bei der Extrusion). Hierdurch prägt der Körper der (ersten) Masse aus der das Kunststoffbauteil gefertigt wird, seine Form derart ein, dass stromab der Fließrichtung des Prozesses zumindest ein Hohlraum in der Masse bzw. dem Kunststoffbauteil entsteht. Der Körper kann z.B. die Form eines üblicherweise in einem Pultrusionswerkzeug verwendeten Kerns oder die Form einer üblicherweise in einem Extrusionswerkzeug verwendeten Extrusionsmaske aufweisen.

Um nun eine weitere, sich von der ersten Masse zumindest in ihren physikalischen Eigenschaften, wie Dichte, Viskosität, Aggregatszustand oder dergleichen, unterscheidende zweite Masse in den hierdurch erzeugten Hohlraum einzubringen, weist der Körper ein Leitungssystem auf, durch das die zweite Masse durch den Körper zu einem Auslass geführt wird, der in den Hohlraum mündet. Die zweite Masse wird also durch das Leitungssystem zu einem Ende des Körpers geführt und von dort in den Hohlraum ausgestoßen. Das Ende bzw. die Seite des Körpers mit dem Auslass zeigt also in Fließrichtung des Prozesses, d.h. ist in Fließrichtung stromab angeordnet.

Auf diese Weise kann die zweite Masse in den durch das Vorhandensein des Körpers erzeugten Hohlraum in der ersten Masse bzw. in dem Kunststoffbauteil eingebracht werden, während die erste Masse an dem Körper vorbeigeführt wird, d.h. während das Kunststoffbauteil gefertigt wird. Ein mit der Fertigung simultanes Auffüllen von Hohlräumen von Kunststoffbauteilen wird damit ermöglicht.

Bei der ersten Masse kann es sich hierbei um jeden gängigen Ausgangsstoff bzw. jedes Stoffgemisch handeln, das üblicherweise für die Herstellung von Kunststoffbauteilen verwendet wird. Die zweite Masse kann ebenso jedes beliebige Material bzw. jede beliebige Stoffkombination sein, die durch ein in dem Körper angeordnetes Leitungssystem transportiert werden kann. Die zweite Masse kann zum Beispiel beim Austreten aus dem Körper oder dem Leitungssystem einen Schaum in dem Hohlraum ausbilden. Wie nachfolgend beschrieben kann die zweite Masse hierzu in dem Körper aus mehreren Komponenten gemischt werden. Es ist aber auch möglich, eine einkomponentige Masse durch die Leitungen zu führen oder eine Masse, die vor Eintritt in das Leitungssystem aus verschiedenen Komponenten gemischt wurde.

Die Abmessungen des Körpers und des Leitungssystems sind hierbei nur durch das jeweilige Anwendungsgebiet begrenzt, d.h. durch das verwendete Verfahren zur Kunststofferzeugung, die verwendete erste Masse und/oder die für die Füllung verwendete zweite Masse. Die Form des Körpers und die Ausgestaltung und Anordnung des Leitungssystems im Körper werden also schlussendlich durch die auf den Körper wirkenden physikalischen Belastungen und die physikalischen Parameter der verwendeten Massen (z.B. Dichte, Viskosität, Temperatur, Aggregatzustand und dergleichen) bestimmt. Demgemäß ausgebildete Vorrichtungen zum Formen eines Kunststoffbauteils eignen sich dann dazu, in verschiedensten Anwendungen der Erzeugung von Kunststoffbauteilen eingesetzt zu werden.

Die Vorrichtung kann des Weiteren eine Mischvorrichtung aufweisen, die an dem Ende des Körpers in dem Körper angeordnet und mit dem Leitungssystem verbunden ist, wobei das Leitungssystem zumindest zwei Leitungen aufweist, die zum Zuführen jeweils einer Mischkomponente zu der Mischvorrichtung geeignet sind, und die Mischvorrichtung geeignet ist, aus den ihr zugeführten Mischkomponenten die zweite Masse durch Mischen zu erzeugen und aus dem Körper auszustoßen.

Das Leitungssystem muss also nicht zwingend nur zum Transport der zweiten Masse durch den Körper ausgelegt sein, sondern kann in einer Mischvorrichtung münden, die derart im Körper angeordnet ist, dass sie die zweite Masse durch Mischen erzeugt und aus dem Körper ausbringt. Dies ist vor allem dann von Vorteil, wenn die zweite Masse erst durch eine Reaktion zwischen verschiedenen, z.B. flüssigen, Mischkomponenten entsteht, z.B. wenn die zweite Masse ein ein- oder mehrkomponentiger Reaktivkunststoff (etwa Polyurethan) ist. Die Anzahl der Mischkomponenten beträgt hierbei vorteilhafter Weise zwei, um einen einfachen Aufbau der Vorrichtung zu ermöglichen. Es können aber bei Bedarf auch mehr als zwei Zuleitungen für mehr als zwei Mischkomponenten vorgesehen sein. In einer besonders einfachen Ausgestaltung können die Zuleitungen durch Aussparungen im Körper gebildet sein. Es können aber, je nach zu fördernder Mischkomponente auch spezielle, z.B. besonders widerstandsfähige Leitungen in den Körper eingelassen sein.

Durch die Anordnung der Mischvorrichtung direkt am Auslass für die zweite Masse, bzw. durch das Auslassen aus der Mischvorrichtung direkt, wird garantiert, dass eine Reaktion in der zweiten Masse, die z.B. zur Ausbildung eines Schaumes oder zum Aushärten der Mischkomponenten führt, nach dem Ausstoß der zweiten Masse stattfindet. Hierdurch wird zum einen eine Beschädigung der Vorrichtung vermieden und zum anderen garantiert, dass der von der Vorrichtung ausgebrachte Füllstoff die richtigen Eigenschaften aufweist, wodurch die Qualität des hergestellten Kunststoffbauteiles verbessert bzw. sichergestellt wird.

Die Mischvorrichtung kann zum statischen oder dynamischen Mischen von Mischkomponenten bei einem Druck von weniger als 100 bar, vorzugsweise von weniger als 50 bar oder 20 bar, geeignet sein. Die Mischvorrichtung stellt also einen Niederdruck-Mischer dar, in dem die vorzugsweise flüssigen Mischkomponenten bei relativ geringem Druck miteinander vermischt werden. Zum Beispiel kann eine statische Mischvorrichtung verwendet werden, in der die Mischkomponenten, durch feststehende Bauteile der Mischvorrichtung gelenkt, ineinander strömen und sich vermischen. Es können aber auch dynamische Mischvorrichtungen verwendet werden, in denen bewegliche Bauteile der Mischvorrichtung die Mischung der Mischkomponenten herbeiführen oder unterstützen. Derartige Niederdruck-Mischvorrichtungen haben den Vorteil, dass weniger hohe Fertigungsanforderungen an sie gestellte werden müssen, insbesondere bezüglich der Druckbeständigkeit der Mischvorrichtung und der mit ihr verbundenen Zuleitungen. Dadurch wird die Herstellung einfacher und damit kostengünstiger.

Die Mischvorrichtung kann aber auch zum Mischen der Mischkomponenten durch Hochdruck-Gegenstrominjektion mit einem Druck von mehr als 100 bar geeignet sein. In diesem Fall besteht die Mischvorrichtung im Wesentlichen aus einer Düse durch die die Mischkomponenten mit derart hohem Druck ausgebracht werden, dass eine vollständige Durchmischung stattfindet. Dies erweitert die Einsetzbarkeit der Vorrichtung, führt aber auch zu höheren Anforderungen an die Druckbeständigkeit des verwendeten Leitungssystems.

Eine der Leitungen kann zum Zuführen eines Polyols und eine andere der Leitungen zum Zuführen eines Isocyanats geeignet sein. Die Mischvorrichtung kann dann geeignet sein, aus dem zugeführten Polyol und Isocyanat durch Mischen und Ausstoßen aus dem Körper einen Polyurethanschaum zu erzeugen. Dadurch eignet sich die Vorrichtung insbesondere für den Einsatz in Werkzeugen zur Herstellung von Kunststoffbauteilen, die eine wärmedämmende oder stabilisierende Füllung erhalten sollen, wie es z.B. für die Herstellung von Fensterprofilen oder Kühlschrankgehäusen der Fall ist. Ein aufwändiges, nachträgliches Einbringen der wärmedämmenden Füllung kann hierdurch vermieden werden, wodurch Kosten eingespart werden können.

Der Körper kann in einer Richtung eine größere Ausdehnung haben als in den beiden anderen Richtungen, insbesondere eine Längsausdehnung von mehr als 1.000 mm und eine maximale Querausdehnung von weniger als 100 mm, vorzugsweise von weniger als 50 mm, und das Leitungssystem und/oder die Mischvorrichtung kann geeignet sein, die zweite Masse in Richtung der größeren Ausdehnung des Körpers auszustoßen. Ein im Gegensatz zu seinen Querabmessungen stark langgestreckter Körper hat zur Folge, dass ein durch Vorbeiführen am Körper erzeugtes Kunststoffteil am Ende aus fertigem, d.h. ausreagiertem, ausgehärtetem und/oder abgekühltem Kunststoff besteht. Es wird also die Gefahr vermieden, dass durch das Einbringen der zweiten Masse eine Wechselwirkung zwischen der ersten Masse und der zweiten Masse auftritt, durch die Eigenschaften der Massen zum Negativen beeinflusst werden. Ein im Vergleich zu den Querabmessungen langer Körper verbessert also die Produkteigenschaften des hergestellten Kunststoffbauteils, bzw. stellt das Erreichen dieser Produkteigenschaften sicher.

Das Leitungssystem kann frei von Ventilen ausgebildet sein und/oder nur Zuleitungen, aber keine Rückleitungen aufweisen. Dadurch wird ein möglichst einfacher Aufbau der Vorrichtung gewährleistet, der es zudem ermöglicht, die Vorrichtung in platzsparender Weise auszubilden. Insbesondere kann durch eine derartige Ausgestaltung die Dicke des Körpers verringert werden, wodurch eine Fertigung von Hohlräumen mit kleineren Querschnittsabmessungen ermöglicht wird. Eine Beeinträchtigung der Qualität der erzeugten Produkte ist hierbei nicht zu befürchten, da die Qualität bei Erzeugung von Kunststoffbauteilen im Endlosbetrieb rasch eingestellt werden kann, so dass nur am Beginn des Prozessablaufs mit einem wirtschaftlich unbedeutenden Ausschuss gerechnet werden muss.

In einem Verfahren zur Herstellung einer Vorrichtung zum Formen eines Kunststoffbauteils, wie sie oben beschrieben wurde, wird die Vorrichtung oder Teile davon durch ein 3D-Druckverfahren oder additive Fertigung (z.B. Laserschmelzen oder Lasersintern) hergestellt. Dies ermöglicht es, insbesondere Leitungssysteme im Körper oder eine besonders langgestreckte Form des Körpers direkt in einem additiven Verfahren, wie dem 3D-Druckverfahren herzustellen. Dies erleichtert zum einen die Herstellung und ermöglicht zum anderen Formen für den Körper, die mit anderen Verfahren nicht herzustellen wären.

Eine Vorrichtung zum Erzeugen von Kunststoffbauteilen mittels Pultrusion weist Mittel zum Erzeugen von faserverstärkten Kunststoffbauteilen durch Pultrusion und eine Vorrichtung zum Formen der Kunststoffbauteile auf, wie sie oben beschrieben wurde. Hierbei sind die Mittel zum Erzeugen der faserverstärkten Kunststoffbauteile geeignet, am Körper entlang zu pultrudieren, wodurch der Hohlraum erzeugt wird, und das Ende des Körpers, aus dem die zweite Masse ausgestoßen wird, befindet sich in Fließrichtung der Pultrusion stromab.

Wird die oben beschrieben Vorrichtung in einem Pultrusionswerkzeug eingesetzt, wird das Gemisch aus Endlosfaser und Kunststoff an dem Körper vorbeigeführt. Durch Aushärten entlang des Körpers wird das faserverstärkte Kunststoffbauteil derart formstabil, dass am Ende des Körpers, je nach Form des Körpers oder der Anzahl verschiedener Körper ein Hohlraum oder mehrere Hohlräume entstehen. Dieser bzw. diese können dann in oben beschriebener Weise mit der (für mehrere Hohlräume auch unterschiedlichen) zweiten Masse ganz oder teilweise aufgefüllt werden, insbesondere mit einem isolierenden oder stabilitätsunterstützenden Schaum. Auf dieser Weise ist es möglich, in zeit- und kostensparender Weise im Pultrusionsverfahren hergestellte und direkt mit einem Füllstoff versehene Kunststoffbauteile herzustellen, wie etwa Fensterrahmen.

Eine Vorrichtung zum Erzeugen von Kunststoffbauteilen mittels Extrusion weist Mittel zum Erzeugen von Kunststoffbauteilen durch Extrusion durch eine Extrusionsmaske und eine Vorrichtung zum Formen der Kunststoffbauteile auf, wie sie oben beschrieben wurde. Hierbei ist der Körper Teil der Extrusionsmaske und das Ende des Körpers, aus dem die zweite Masse ausgestoßen wird, befindet sich in Fließrichtung der Extrusion stromab.

Wird die oben beschriebene Vorrichtung für die Extrusion verwendet, ist der Körper der Vorrichtung der Teil der Extrusionsmaske, der zwischen den Austrittsöffnungen für die verschiedenen Lagen des Extrudats angeordnet ist. Werden z.B. ineinander liegende Rohre extrudiert, ist der Körper zumindest der zwischen den Austrittsöffnungen des die jeweiligen Rohre bildenden Kunststoffes liegende Teil der Extrusionsmaske. Durch das Einbringen eines Füllstoffes zwischen die Einzellagen während diese extrudiert werden, kann in rascher und einfacher Weise ein Schichtaufbau erzielt werden, der ansonsten nur, wenn überhaupt, in komplizierten, mehrstufigen Verfahren erreicht werden könnte.

Obwohl die obige Beschreibung sich hauptsächlich mit Kunststoffen als Materialien für die erste Masse und die zweite Masse befasst, versteht es sich von selbst, dass die gleichen Prinzipien auch auf die Herstellung von Elementen aus anderen Materialien anwenden lassen. So kann eine Vorrichtung wie sie oben beschrieben wurde, z.B. auch in der Lebensmittelindustrie verwendet werden, um durch Extrusion gewonnene Lebensmittelformen mit einer Füllung zu versehen.

Im Folgenden wird die vorliegende Erfindung mit Bezug auf die Kunststoffverarbeitung anhand der beigefügten Figuren beispielhaft beschrieben. Es zeigt:
- **Fig. 1A und 1B**: eine schematische Darstellung einer Vorrichtung zum Formen eines Kunststoffbauteils;
- **Fig. 2**: eine schematische Darstellung einer weiteren Vorrichtung zum Formen eines Kunststoffbauteils;
- **Fig. 3**: eine schematische Darstellung einer Vorrichtung zum Herstellen von Kunststoffbauteilen unter Verwendung der in den Fig. 1A und 1B gezeigten Vorrichtung zum Formen des Kunststoffbauteils;
- **Fig. 4**: eine schematische Darstellung eines Querschnitts durch ein mit der in der Fig. 3 gezeigten Vorrichtung hergestelltes Kunststoffbauteil.

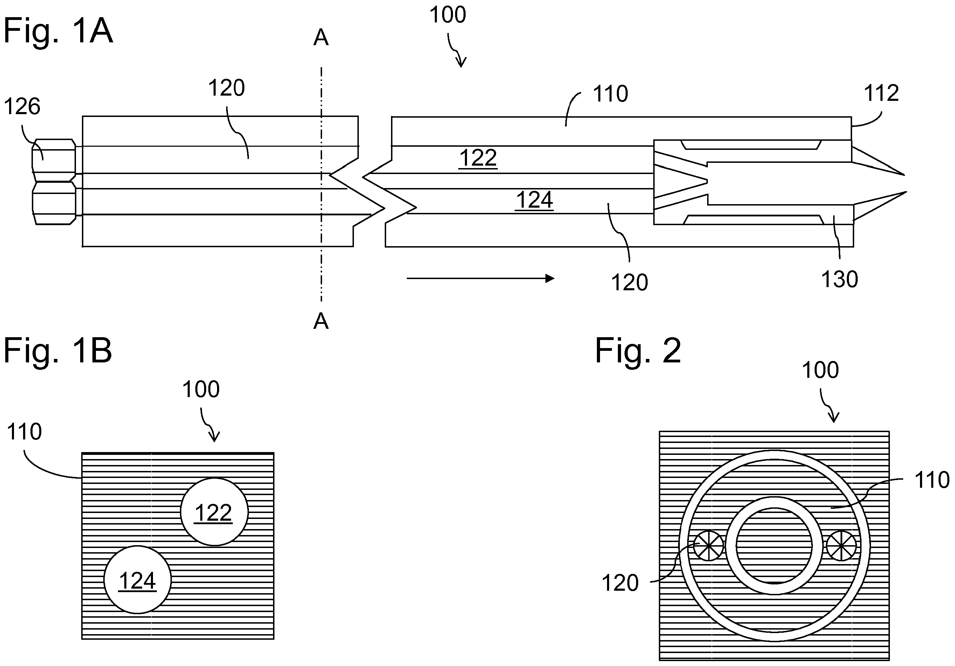

Die Fig. 1A zeigt eine schematische Seitenansicht einer Vorrichtung 100 zum Formen von Kunststoffbauteilen mit einem Körper 110 und einem durch den Körper 110 führendem Leitungssystem 120. Die Fig. 1B zeigt schematisch einen Querschnitt durch die Vorrichtung 100 entlang der Linie A-A.

Die Vorrichtung 100 ist dazu geeignet, Kunststoffbauteilen, die in einem Endlosverfahren hergestellt werden, während der Herstellung eine Form zu geben, indem eine Masse, aus der die Kunststoffbauteile gefertigt werden, an der Vorrichtung 100 vorbeigeführt, insbesondere vorbeigedrückt bzw. -gepresst werden. So wird z.B. an der Vorrichtung 100 eine Masse entlang des in der Fig. 1A gezeigten Pfeils vorbeigeführt, wenn die Vorrichtung 100 in einer Apparatur bzw. Vorrichtung zum Herstellen bzw. Erzeugen von Kunststoffteilen eingesetzt wird.

Die Masse aus denen die Kunststoffteile erzeugt werden wandert hierbei entlang des Körpers 110 auf ein in Fließrichtung der Masse stromab liegendes Ende 112 des Körpers 110 zu. Die Außenform des Körpers 110 wird dabei von der Masse ganz oder teilweise umschlossen, so dass, wenn die Masse zu dem gewünschten Kunststoff aushärtet oder reagiert, eine Innenform des Kunststoffs der Außenform des Körpers 110 entspricht. Bei vollständigem Umschließen des Körpers 110 durch die Masse, bzw. das Kunststoffbauteil wird also im Kunststoffteil ein Hohlraum durch die Vorrichtung 100 bzw. durch deren Körper 110 geformt. Werden mehrere Körper 110 verwendet oder umfasst der Körper 110 Gabelungen oder dergleichen, können auch Kunststoffteile mit mehr als nur einem Hohlraum hergestellt werden. Die Masse zur Herstellung der Kunststoffteile kann hierbei jedes beliebige hierzu geeignete Material sein.

Der Querschnitt des Körpers 110 kann jede beliebige Form aufweisen, die für das zu erzeugende Kunststoffteil vonnöten ist. Wie in der Fig. 1B beispielhaft gezeigt, kann der Körper 110 einen in etwa rechteckigen Querschnitt aufweisen, z.B. wenn es sich bei den Kunststoffteilen um Bestandteile von Fensterrahmen handelt. Der Körper 110 kann aber auch einen runden Querschnitt haben, z.B. bei der Herstellung von Kunststoffrohren. Ebenso ist ein unregelmäßiger Querschnitt mit Einbuchtungen und Vorsprüngen denkbar, wenn dies für die Form des Kunststoffbauteils gewünscht ist.

Je nach Einsatzgebiet kann der Körper 110 unterschiedliche Längen aufweisen. Zum Beispiel kann der Körper 110, wenn die Vorrichtung 100 in einem Pultrusionswerkzeug verwendet wird, d.h. der Körper 110 den Kern des Pultrusionswerkzeugs darstellt, relativ lang ausgebildet sein, z.B. mit einem Längezu-Breite-Verhältnis von 30:1, 20:1 oder 10:1. Beispielsweise kann eine Querschnittsabmessung des Körpers weniger als 100 mm oder weniger als 50 mm betragen, während die Länge des Körpers mehr als 1.000 mm beträgt. Dies hat den Vorteil, dass ein an dem Körper 110 vorbeigeführtes Gemisch aus Fasern und Kunststoff (erste Masse) entlang des Körpers 110 abkühlen, aushärten und/oder ausreagieren kann, um während der Befüllung mit der zweiten Masse bereits ausreichend kühl und/oder stabil (chemisch und/oder physikalisch) zu sein.

Auch bei einem Einsatz in Extrusionsverfahren kann der Körper 110 eine langgestreckte Form aufweisen, um die oben genannten Vorteile zu erzielen. Der Körper 110 kann hier aber auch relativ kompakt ausgebildet sein und den Teil einer Extrusionsmaske darstellen, durch die die erste Masse gepresst wird. Der Körper 110 kann auch Kanäle aufweisen, die es erlauben, die erste Masse zum Teil durch den Körper 110 zu führen, um z.B. doppelwandige oder mehrwandige Extrudate zu erzeugen.

Die Form des Körpers 110 kann also flexibel an das jeweilige Einsatzgebiet angepasst werden. Insofern sind die in den Figuren dargestellten Formen nur beispielhaft und dürfen nicht als einschränkend angesehen werden.

Durch den Körper 110 der Vorrichtung 100 führt das Leitungssystem 120. Das Leitungssystem 120 ist geeignet, eine sich von der (ersten) Masse, aus der das Kunststoffbauteil gefertigt wird, unterscheidende (zweite) Masse durch den Körper 110 zu führen und in den von dem Körper 110 geformten Hohlraum des Kunststoffbauteils auszustoßen. Das Leitungssystem 120 endet also an dem Ende 112 des Körpers 110, das in Fließrichtung der ersten (und auch der zweiten) Masse stromab liegt. Die zweite Masse gelangt also durch das Leitungssystem 120 in den in der ersten Masse bzw. dem Kunststoffbauteil ausgebildeten Hohlraum, noch während die erste Masse zur Fertigung des Kunststoffbauteils am Körper vorbeigeführt wird. Das Einbringen der zweiten Masse in den Hohlraum erfolgt also bei Einsatz der Vorrichtung 100 gleichzeitig mit der Fertigung des Kunststoffteils.

Wie in der Fig. 1B gezeigt, kann das Leitungssystem 120 eine erste Leitung 122 und eine zweite Leitung 124 aufweisen. Es können aber auch mehr als zwei oder nur eine einzelne Leitung in dem Leitungssystem 120 vorhanden sein. Eine Mehrzahl von Leitungen kann z.B. vorhanden sein, um durch Ausstoß aus den Leitungen die zweite Masse gleichmäßiger in dem Hohlraum des Kunststoffteils zu verteilen, so dass eine homogene Füllung entsteht. In diesem Fall ist es möglich, dass das Leitungssystem 120 ohne weitere an das Leitungssystem 120 angeschlossene Komponenten mit dem stromab gelegenen Ende 112 des Körpers 110 endet, d.h. Leitungen des Leitungssystems 120 stoßen die zweite Masse direkt aus dem Körper 110 aus. Leitungen des Leitungssystems 120 dienen dann als Auslassöffnungen aus dem Körper 110.

Vor allem wenn die aus dem Körper 110 austretende zweite Masse aus mehr als einer Komponente bestehen soll, können in verschiedenen Leitungen des Leitungssystems 120 aber auch verschiedene Materialien gefördert werden. Die Anordnung der Leitungen im Körper 110 bzw. an dessen Ende 112 kann dann z.B. dazu verwendet werden, eine geschichtete Füllung des Hohlraums mit verschiedenen Materialien zu erzeugen. Auch hierzu können die Leitungen direkt an dem Ende 112 des Körpers 110 enden.

Alternativ hierzu ist es aber häufig gewünscht, eine Mischung aus mehreren Stoffen, wie etwa einen Schaum, aus dem Körper 110 in den Hohlraum des Kunststoffbauteils einzubringen. Hierzu kann, wie in der Fig. 1A beispielhaft gezeigt, eine Mischvorrichtung 130 am Ende 112 des Körpers 110 angebracht sein, bzw. in diesem ausgebildet sein. Das Leitungssystem 120 führt der Mischvorrichtung 130 dann eine Mehrzahl von z.B. flüssigen Mischkomponenten zu, die von der Mischvorrichtung 130 in an sich bekannter Weise durchmischt werden. Wie in der Fig. 1A gezeigt können zum Beispiel zwei Leitungen 122, 124 vorgesehen sein, die zwei verschiedene Mischkomponenten, wie etwa ein Polyol und ein Isocyanat, zur Mischvorrichtung 130 fördern.

Bei der Mischvorrichtung 130 kann es sich um jedes beliebige Bauteil handeln, dass in die Vorrichtung 100 eingesetzt werden kann. Zum Beispiel kann die Mischvorrichtung 130 im Niederdruckbereich arbeiten, d.h. bei einem Druck von weniger als 100 bar oder 50 bar oder 20 bar. Dies stellt an die Stabilität der Mischvorrichtung 130 und des Leitungssystems 120 nur geringe Anforderungen, wodurch eine Fertigung der Vorrichtung 100 erleichtert wird.

Die Mischvorrichtung 130 kann die Mehrzahl von Mischkomponenten dabei statisch oder dynamisch mischen. Das heißt, die Mischvorrichtung 130 ist entweder derart ausgebildet, dass eine Durchmischung der Mischkomponenten bereits allein durch die Ausgestaltung von im Strömungspfad der Mischkomponenten liegenden, feststehenden Bauteilen der Mischvorrichtung 130 hervorgebracht wird (statischer Mischer). Oder die Mischvorrichtung 130 ist alternativ oder zusätzlich mit beweglichen Bauteilen ausgestattet, die durch ihre Bewegung den Mischprozess bewerkstelligen oder unterstützen (dynamischer Mischer).

Alternativ kann die Mischvorrichtung 130 auch dazu geeignet sein, eine Mehrzahl von Mischkomponenten unter Hochdruckbedingungen zu mischen, d.h. bei mehr als 100 bar. Die Mischkomponenten werden hierzu bereits im Leitungssystem 120 auf einen hierzu notwendigen Druck gebracht und dann z.B. in einer Mischdüse durch Gegenstrominjektion gemischt und aus dem Körper 110 ausgebracht.

Es versteht sich aber von selbst, dass neben den oben beschriebenen Varianten von Mischvorrichtungen 130 jede andere Ausgestaltung in der Vorrichtung 100 verwendet werden kann, die es erlaubt, eine Mischung von mehreren Mischkomponenten in den Hohlraum des durch Vorbeiführen an dem Körper 100 erzeugten Kunststoffbauteils einzubringen. Falls nötig und bei ausreichenden Platz im Körper 110 können auch mehr als eine Mischvorrichtung 130 mit den entsprechenden Zuleitungen in der Vorrichtung 100 vorgesehen sein. Dies erlaubt dann bei entsprechend großen Hohlräumen eine gleichmäßige Befüllung mit der gemischten Masse. Ebenso können über mehrere Leitungssysteme in einem oder mehreren Körpern mehrere Hohlräume in dem geformten Kunststoffbauteilen mit der gleichen oder auch verschiedenen Massen (jeweils gemischt oder ungemischt) gefüllt werden.

Besonders hervorzuheben ist die Möglichkeit, mit der Vorrichtung 100 direkt bei der Herstellung von Kunststoffbauteilen Hohlräume der Bauteile, die durch die Vorrichtung 100 erzeugt werden, mit einem isolierenden, stabilisierenden oder andere Eigenschaften aufweisenden Schaum aufzufüllen, der durch Mischen von mehreren Mischkomponenten in der Mischvorrichtung 130 erzeugt wird. So kann z.B. bei der Verwendung von Polyolen und Isocyanaten als Mischkomponenten ein Polyurethanschaum direkt in die Kunststoffbauteile verspritzt werden. Es können durch Verwendung der Vorrichtung 100 also in einem Arbeitsgang mit einem wärmeisolierenden oder stabilisierenden Material gefüllte Kunststoffbauteile hergestellt werden. Zudem kann die Befüllung des Hohlraums dem fertigen Bauteil noch weitere Eigenschaften geben, wie z.B. eine veränderte Wärme- oder Schallleitfähigkeit oder veränderte Elastizitäts- oder Schermodule.

Um eine einfachere Fertigung der Vorrichtung 100 zu ermöglichen, kann das in dem Körper 110 ausgebildete Leitungssystem 120 ohne sich im Körper befindliche Ventile ausgebildet sein, d.h. das Leitungssystem 120 wird über außerhalb des Körpers 110 an einem Ende des Körpers 110 vorgesehene Anschlussventile 126 an Vorratsbehälter für die zweite Masse bzw. für Mischkomponenten zu deren Herstellung angeschlossen. Sobald die Masse/die Komponenten in den Körper 110 eingebracht wurden, strömen sie auf das Ende 112 mit der Mischvorrichtung 130 bzw. Auslässen zu. In diesem Sinne kann die Vorrichtung 100 auch ohne Rückleitungen ausgebildet sein, die zur Rückleitung von Stoffen aus dem Körper 110 zu Vorratsbehältern dienen. Dadurch wird ein einfacher und kostengünstig herzustellender Aufbau der Vorrichtung 100 erreicht.

Die Vorrichtung 100 kann insbesondere durch ein additives Verfahren, wie z.B. ein 3D-Druckverfahren hergestellt werden. Dies erlaubt es, z.B. das Leitungssystem 120 direkt in dem Körper 110 auszubilden, ohne es aus dem Körper 110 herausfräsen oder -bohren zu müssen. Dadurch können Körper 110 mit großer Länge hergestellt werden, die mit Leitungssystemen 120 in Längsrichtung vollständig durchsetzt und mit anderen Fertigungsverfahren nicht oder nur unter großem Aufwand realisierbar sind. Zudem erlaubt es die Verwendung von 3D-Druckverfahren, die äußere Form des Körpers 110 nahezu beliebig auszugestalten, wodurch es möglich wird, Vorrichtungen 100 zum Formen von Kunststoffbauteilen wie sie oben beschrieben wurden in einem breiten Bereich der Herstellung von Kunststoffbauteilen zu verwenden.

Wie oben bereits erwähnt kann die Vorrichtung 100 z.B. als Teil einer Extrusionsmaske oder als Kern einer Pultrusionsvorrichtung verwendet werden.

Die Fig. 2 zeigt z.B. einen Querschnitt durch eine Extrusionsmaske mit der Vorrichtung 100, die für die Herstellung von doppelwandigen Rohren verwendet werden kann. Die erste Masse, aus der die Rohrwände erzeugt werden, wird hierbei durch die beiden hell dargestellten Ringe gepresst. Der Körper 110 kann in diesem Fall einen ringförmigen Querschnitt aufweisen. Das außen liegende Rohr wird dann durch Pressen der ersten Masse an der Außenseite des Körpers 110 vorbei hergestellt, während das innen liegende Rohr durch Pressen der ersten Masse entlang der Innenseite des Körpers 110 erzeugt wird. Der ringförmige Körper 110 umfängt einen inneren Teil der Extrusionsmaske und ist selbst durch einen äußeren Teil der Extrusionsmaske umfasst. In diesem Fall ist es auch möglich, das innere Rohr aus einem anderen Material zu fertigen als das äußere Rohr. Alternativ kann der Körper 110 auch die gesamte Extrusionsmaske darstellen und Kanäle aufweisen, durch die die erste Masse durch die hell dargestellten Ringe gepresst wird. Dann sind inneres und äußeres Rohr aus dem gleichen Material gefertigt. Es versteht sich von selbst, dass durch die Verwendung anderer, entsprechend geformter Körper auch jede andere beliebige Form von Kunststoffteilen extrudiert werden kann. Insbesondere können auch Formen mit mehr oder weniger als zwei Wänden in beliebiger Ausgestaltung extrudiert werden.

Die Fig. 2 zeigt beispielhaft zwei Auslassöffnungen eines in dem Körper 110 vorhandenen Leitungssystems 120. Diese dienen dazu, den zwischen den beiden durch Extrusion gefertigten Rohren liegenden Hohlraum gleichmäßig mit der zweiten Masse zu befüllen. Es versteht sich von selbst, dass auch Systeme mit einer oder mehr als zwei Auslassöffnungen möglich sind. Die aus den Auslassöffnungen ausgebrachte Massen können sich hierbei unterscheiden oder auch identisch sein.

In den Auslassöffnungen können auch Mischvorrichtungen 130 angebracht sein. Zum Beispiel kann das Leitungssystem 120 in jeder der Auslassöffnungen in einer Mischvorrichtung 130 enden, wie sie oben mit Bezug auf die Fig. 1A beschrieben wurde. Dies erlaubt es, auch Komponentenmischungen in das Extrudat einzubringen, z.B. einen Reaktivkunststoff wie etwa Polyurethan.

Die Ausdehnung des Körpers 110 senkrecht zur Zeichenebene der Fig. 2 kann hierbei beliebig sein. Insbesondere können die durch die Extrusionsöffnungen, d.h. die hell dargestellten Ringe, getrennten Bereiche der Extrusionsmaske sich verschieden weit aus der Zeichenebene heraus erstrecken, um z.B. das Extrudat entlang eines sich weiter nach vorne erstreckenden ringförmigen Körpers 110 noch einige Zeit zu führen, bevor die zweite Masse aus dem Leitungssystem 120 bzw. der Mischvorrichtung 130 in den durch den Körper 110 geformten Hohlraum des Extrudats eingebracht wird. Dadurch wird sichergestellt, dass das Kunststoffbauteil vor Einbringen der zweiten Masse ausreichend abgekühlt und/oder stabil ist.

Die Vorrichtung 100 ermöglicht es also, während der Extrusion einen im Extrudat befindlichen Hohlraum, wie etwa den Zwischenraum zwischen zwei Rohren, in einem Arbeitsgang zusammen mit der Herstellung des Extrudats zu befüllen. Es versteht sich von selbst, das je nach extrudierter Form der Körper 110 der Vorrichtung 100 und die Anordnung von Leitungssystem(en) 120 und Mischvorrichtung(en) 130 sich in ihrer Ausgestaltung von dem in der Fig. 2 gezeigten Beispiel unterscheiden können. Die konkrete Ausgestaltung richtet sich hierbei nach dem tatsächlich gefertigten Kunststoffbauteil, ohne die grundlegende Eigenschaft der Vorrichtung 100 zu beeinträchtigen, gleichzeitig zumindest einen Hohlraum in einem Kunststoffbauteil zu formen und diesen mit einer Masse zu befüllen, etwa mit einem isolierenden oder stabilisierenden Schaum.

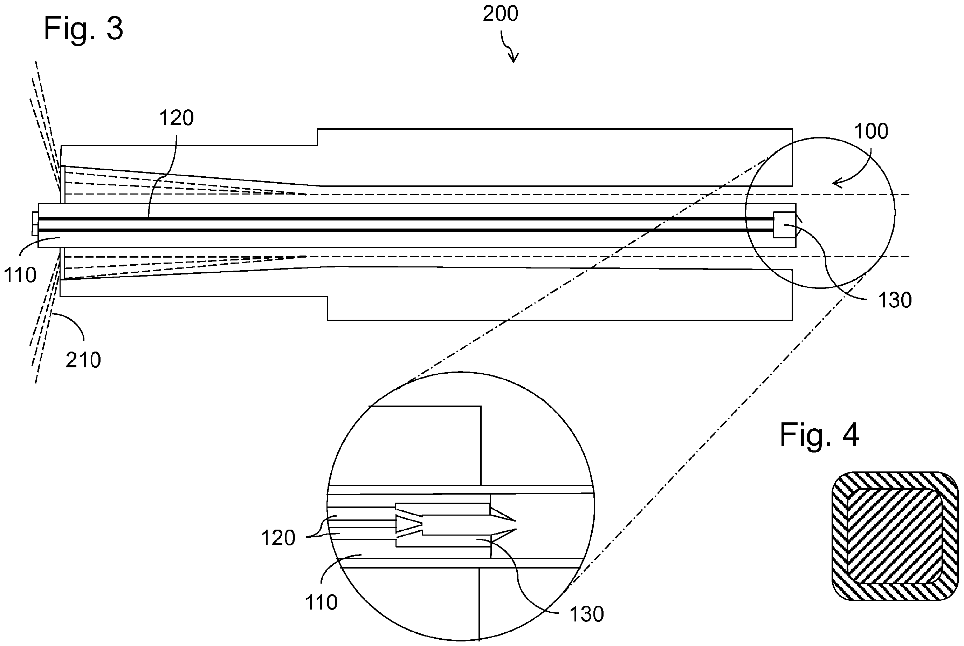

Die Fig. 3 zeigt in schematischer Weise den Einsatz einer Vorrichtung 100, wie sie in der Fig. 1A dargestellt ist, in einem Pultrusionsvorrichtung 200. Die Verwendung der Darstellung der Vorrichtung aus der Fig. 1A dient hier nur der Vereinfachung der Beschreibung. Es versteht sich von selbst, dass jede andere Art von Ausgestaltung der Vorrichtung 100 möglich ist, wie sie oben diskutiert wurde.

In der Pultrusionsvorrichtung 200 werden Endlosfasern 210 (oder auch andere Halbzeugformen, Gelege, Gewebe oder Einleger) mit Hilfe von bekannten, nicht im Detail dargestellten Mitteln mit Kunststoff(en), wie z.B. Polyurethan, Polyamid, Epoxidharz oder dergleichen, vermischt. Durch Vorbeiführen dieser als erster Masse fungierenden Mischung am Körper 110 der Vorrichtung 100, der in der Pultrusionsvorrichtung 200 als Kern dient, erhält die Mischung ein dem fertigen Kunststoffbauteil entsprechendes Profil, z.B. ein Fensterrahmenprofil. Bei vollständigem Umfassen des Körpers 110 durch das Endlosfaser/KunststoffGemisch wird also ein Hohlraum in dem Kunststoffbauteil geformt, dessen Querschnitt dem Querschnittsumfang des Körpers 110 entspricht. Bei Bedarf können auch mehrere Kerne bzw. Körper 110 in der Pultrusionsvorrichtung 200 angeordnet sein, die dann mehrere Hohlräume in dem Kunststoffbauteil erzeugen.

In diesen Hohlraum wird dann z.B. am Ende der Pultrusionsvorrichtung 200 aus dem sich in Fließrichtung stromab befindlichen Ende des Körpers 110, z.B. durch eine in der Fig. 3 in Vergrößerung dargestellte Mischvorrichtung 130 wie sie oben beschrieben wurde, eine zweite Masse eingebracht, z.B. ein isolierender oder stabilisierender Schaum, etwa Polyurethanschaum. Es kann also ein in einem Kunststoffbauteil vorhandener Hohlraum direkt bei dessen Fertigung mit einem Füllstoff versehen werden, wodurch eine komplizierte und kostspielige nachträgliche Befüllung entfällt. Das Ergebnis ist beispielhaft in der Fig. 4 gezeigt, in der ein innen liegender Füllstoff ein außen liegendes Kunststoffprofil vollständig ausfüllt.

Durch eine große Längsausdehnung des Körpers 100, wie sie oben diskutiert wurde und wie sie in der Fig.3 schematisch dargestellt ist, wird garantiert, dass das Kunststoffprofil am Ende des Körpers 110 bereits ausreichend abgekühlt und/oder stabil ist, dass eine Befüllung mit dem gewünschten Material problemlos möglich ist. Dies erlaubt insbesondere die direkte Befüllung von Fensterprofilen bei deren Herstellung im Endlosprozess. Für andere Anwendungen kann aber auch eine kompaktere Form des Körpers 110 ausreichend sein.

Die oben mit Bezug auf Pultrusions- und Extrusionsverfahren beschriebene Vorrichtung 100 zum Formen von Kunststoffbauteilen ermöglicht es, in einfacher Weise verschiedenste Kunststoffbauteile mit Hohlräumen direkt bei deren Herstellung mit einer Füllung zu versehen. Dadurch entfallen nachfolgende Produktionsschritte, wodurch große Kosteneinsparungen und eine schnellere Produktion ermöglicht werden. Die vorstehend beispielhaft beschriebene Erfindung ist hierbei nur durch den Gegenstand der folgenden Patentansprüche beschränkt.

### Bezugszeichenliste

- 100: Vorrichtung zum Formen eines Kunststoffbauteils
- 110: Körper
- 112: Ende des Körpers
- 120: Leitungssystem
- 122: Erste Leitung
- 124: Zweite Leitung
- 126: Anschlussventile
- 130: Mischvorrichtung
- 200: Pultrusionsvorrichtung
- 210: Endlosfasern

## Patentansprüche

1. Vorrichtung (100) zum Formen eines Kunststoffbauteils, wobei die Vorrichtung (100) aufweist:
einen Körper (110), der zum Verwenden in einer Vorrichtung zum Erzeugen von Kunststoffbauteilen aus einer ersten Masse geeignet ist und der derart ausgebildet ist, dass bei der Verwendung in der Vorrichtung zum Erzeugen von Kunststoffbauteilen die erste Masse durch Vorbeiführen an dem Körper (110) in eine Form gebracht wird, die mindestens einen Hohlraum aufweist, der in Richtung des Vorbeiführens durchgängig ist;
**gekennzeichnet durch**
ein in dem Körper (110) angeordnetes Leitungssystem (120), durch das eine zweite Masse aus einem Ende (112) des Körpers (110) ausgestoßen werden kann, um die zweite Masse in den Hohlraum einzubringen, während die erste Masse an dem Körper (110) vorbeigeführt wird, des Weiteren aufweisend
eine Mischvorrichtung (130), die an dem Ende (112) des Körpers (110) in dem Körper (110) angeordnet und mit dem Leitungssystem (120) verbunden ist; wobei
das Leitungssystem (120) zumindest zwei Leitungen (122, 124) aufweist, die zum Zuführen jeweils einer Mischkomponente zu der Mischvorrichtung (130) geeignet sind; und
die Mischvorrichtung (130) geeignet ist, aus den ihr zugeführten Mischkomponenten die zweite Masse durch Mischen zu erzeugen und aus dem Körper (110) auszustoßen, wobei
die Mischvorrichtung (130) zum Mischen der Mischkomponenten durch Hochdruck-Gegenstrominjektion mit einem Druck von mehr als 100 bar geeignet ist.

2. Vorrichtung (100) nach Anspruch 1, wobei
die Mischvorrichtung (130) zum statischen oder dynamischen Mischen von Mischkomponenten bei einem Druck von weniger als 100 bar, vorzugsweise von weniger als 50 bar oder 20 bar, geeignet ist.

3. Vorrichtung (100) nach einem der vorherigen Ansprüche, wobei
eine der Leitungen (122, 124) zum Zuführen eines Polyols und eine andere der Leitungen (122, 124) zum Zuführen eines Isocyanats geeignet ist; und
die Mischvorrichtung (130) geeignet ist, aus dem zugeführten Polyol und Isocyanat durch Mischen und Ausstoßen aus dem Körper (110) einen Polyurethanschaum zu erzeugen.

4. Vorrichtung (100) nach einem der vorherigen Ansprüche, wobei
der Körper (110) in einer Richtung eine größere Ausdehnung hat als in den beiden anderen Richtungen, insbesondere eine Längsausdehnung von mehr als 1.000 mm und eine maximale Querausdehnung von weniger als 100 mm, vorzugsweise von weniger als 50 mm; und
das Leitungssystem (120) und/oder die Mischvorrichtung (130) geeignet ist, die zweite Masse in Richtung der größeren Ausdehnung des Körpers (110) auszustoßen.

5. Vorrichtung (100) nach einem der vorherigen Ansprüche, wobei
das Leitungssystem (120) keine Ventile und/oder nur Zuleitungen, aber keine Rückleitungen aufweist.

6. Verfahren zur Herstellung einer Vorrichtung (100) gemäß einem der vorherigen Ansprüche, wobei
die Vorrichtung (100) oder Teile davon durch ein 3D-Druckverfahren oder additive Fertigung hergestellt wird.

7. Vorrichtung (200) zum Erzeugen von Kunststoffbauteilen mittels Pultrusion, aufweisend:
Mittel zum Erzeugen von faserverstärkten Kunststoffbauteilen durch Pultrusion; und
eine Vorrichtung (100) zum Formen der Kunststoffbauteile gemäß einem der Ansprüche 1 bis 5; wobei
die Mittel zum Erzeugen der faserverstärkten Kunststoffbauteile geeignet sind, am Körper (110) entlang zu pultrudieren, wodurch der Hohlraum erzeugt wird; und
sich das Ende (112) des Körpers (110), aus dem die zweite Masse ausgestoßen wird, in Fließrichtung der Pultrusion stromab befindet.

8. Vorrichtung zum Erzeugen von Kunststoffbauteilen mittels Extrusion, aufweisend:
Mittel zum Erzeugen von Kunststoffbauteilen durch Extrusion durch eine Extrusionsmaske; und
eine Vorrichtung (100) zum Formen der Kunststoffbauteile gemäß einem der Ansprüche 1 bis 5; wobei
der Körper (110) Teil der Extrusionsmaske ist; und
sich das Ende (112) des Körpers (110), aus dem die zweite Masse ausgestoßen wird, in Fließrichtung der Extrusion stromab befindet.

## Claims

1. A device (100) for forming a plastic component, wherein the device (100) has:
a body (110), which is suitable for use in a device for producing plastic components from a first compound and which is formed in such a way that, when used in the device for producing plastic components, the first compound, by being guided past the body (110) is brought into a form which has at least one cavity, which is continuous in the direction of guiding past;
**characterized by**
a line system (120), arranged in the body (110), through which a second compound can be expelled from an end (112) of the body (110), in order to introduce the second compound into the cavity, while the first compound is guided past the body (110), furthermore having
a mixing device (130), which is arranged in the body (110) at the end (112) of the body (110) and is connected to the line system (120); wherein
the line system (120) has at least two lines (122, 124) which are suitable for feeding respectively a mixing component to the mixing device (130); and
the mixing device (130) is suitable to produce the second compound by mixing from the mixing components which are fed to it, and to expel it from the body (110), wherein
the mixing device (130) is suitable for mixing the mixing components by high pressure counterflow injection at a pressure of more than 100 bar.

2. The device (100) according to Claim 1, wherein
the mixing device (130) is suitable for the static or dynamic mixing of mixing components at a pressure of less than 100 bar, preferably of less than 50 bar or 20 bar.

3. The device (100) according to one of the preceding claims, wherein
one of the lines (122, 124) is suitable for feeding a polyol and another of the lines (122, 124) is suitable for feeding an isocyanate; and
the mixing device (130) is suitable to produce a polyurethane foam from the fed polyol and isocyanate by mixing and expelling from the body (110).

4. The device (100) according to one of the preceding claims, wherein
the body (110) has a greater extent in one direction than in the other two directions, in particular a longitudinal extent of more than 1,000 mm and a maximum transverse extent of less than 100 mm, preferably of less than 50 mm; and
the line system (120) and/or the mixing device (130) is suitable to expel the second compound in the direction of the greater extent of the body (110).

5. The device (100) according to one of the preceding claims, wherein
the line system (120) has no valves and/or only feed lines, but no return lines.

6. A method for the production of a device (100) according to one of the preceding claims, wherein
the device (100) or parts thereof is produced by a 3D printing method or additive manufacture.

7. A device (200) for producing plastic components by means of pultrusion, having:
means for producing fibre-reinforced plastic components by pultrusion; and
a device (100) for forming the plastic components according to one of Claims 1 to 5; wherein
the means for producing the fibre-reinforced plastic components are suitable to pultrude along the body (110), whereby the cavity is produced; and
the end (112) of the body (110) from which the second compound is expelled is situated downstream in flow direction of the pultrusion.

8. A device for producing plastic components by means of extrusion, having:
means for producing plastic components by extrusion through an extrusion mask; and
a device (100) for forming the plastic components according to one of Claims 1 to 5; wherein
the body (110) is part of the extrusion mask; and
the end (112) of the body (110) from which the second compound is expelled is situated downstream in flow direction of the extrusion.

## Revendications

1. Dispositif (100) de façonnage d'un composant en matière plastique, dans lequel le dispositif (100) présente :
un corps (110) qui est approprié pour l'utilisation dans un dispositif de façonnage de composants en matière plastique à partir d'une première masse et est ainsi conçu que lors de l'utilisation dans le dispositif pour fabriquer des composants en matière plastique, la première masse est façonnée en passant devant le corps (110) et présente au moins une cavité qui est traversante en direction du passage ;
**caractérisé par**
un système de tuyaux (120) disposé dans le corps (110) à travers lequel une seconde masse peut être expulsée d'une extrémité (112) du corps (110) pour amener la seconde masse dans la cavité, tandis que la première passe devant le corps (110), présentant en outre :
un dispositif de mélange (130) qui est disposé dans le corps (110) à l'extrémité (112) du corps (110) et est relié au système de tuyaux (120) ; dans lequel le système de tuyaux (120) présente au moins deux tuyaux (122, 124) qui sont appropriés pour amener respectivement une composante de mélange vers le dispositif de mélange (130) ; et
le dispositif de mélange (130) est approprié pour produire la seconde masse par mélange, à partir des composantes de mélange qui lui sont amenées et la faire sortir du corps (110), dans lequel le dispositif de mélange (130) est approprié pour mélanger les composantes de mélange par injection haute pression à contre-courant avec une pression supérieure à 100 bar.

2. Dispositif (100) selon la revendication 1, dans lequel le dispositif de mélange (130) est approprié pour le mélange statique ou dynamique de composantes de mélange à une pression inférieure à 100 bar, de préférence inférieure à 50 bar ou 20 bar.

3. Dispositif (100) selon l'une des revendications précédentes, dans lequel
un des tuyaux (122, 124) est approprié pour amener un polyol et un autre des tuyaux (122, 124) pour amener un isocyanate ; et
le dispositif de mélange (130) est approprié pour produire une mousse polyuréthane à partir du polyol et de l'isocyanate amenés par mélange et expulsion hors du corps (110).

4. Dispositif (100) selon l'une des revendications précédentes, dans lequel
le corps (110) a le plus grand allongement dans un sens que dans les deux sens, en particulier un allongement longitudinal de plus de 1,000 mm et un allongement transversal maximal de moins de 100 mm, de préférence de moins de 50 mm ; et
le système de tuyaux (120) et/ou le système de mélange (130) est approprié pour expulser la seconde masse en direction de l'allongement le plus grand du corps (110) .

5. Dispositif (100) selon l'une des revendications précédentes, dans lequel
le système de tuyaux (120) ne présente pas de clapets et/ou uniquement des lignes d'arrivées, mais pas de lignes de retour.

6. Procédé pour fabriquer un dispositif (100) selon l'une des revendications précédentes, dans lequel le dispositif (100) ou des parties de celui-ci sont fabriqué(es) par un procédé d'impression en 3D ou par fabrication additive.

7. Dispositif (200) pour fabriquer des composants en matière plastique par pultrusion, présentant :
des moyens pour produire des composants en matière plastique renforcés par fibres par pultrusion ; et
un dispositif (100) pour façonner les composants en matière plastique selon l'une des revendications 1 à 5 ; dans lequel
les moyens pour fabriquer les composants en matière plastique renforcés par fibres sont appropriés pour effectuer une pultrusion le long du corps (110), ce qui crée la cavité ; et
l'extrémité (112) du corps (110) de laquelle la seconde masse est expulsée, se trouve en aval dans la direction d'écoulement de la pultrusion.

8. Dispositif pour fabriquer des composants en matière plastique par pultrusion, présentant :
des moyens pour produire des composants en matière plastique par extrusion à travers un masque d'extrusion ; et
un dispositif (100) pour façonner les composants en matière plastique selon l'une des revendications 1 à 5 ; dans lequel
le corps (110) fait partie du masque d'extrusion ; et
l'extrémité (112) du corps (110) de laquelle la seconde masse est expulsée, se trouve en aval dans la direction d'écoulement de la pultrusion.
